# EUROPÄISCHE PATENTSCHRIFT

(11) **EP 1 592 966 B1**
(45) Veröffentlichungstag und Bekanntmachung des Hinweises auf die Patenterteilung: **13.04.2016**
(21) Anmeldenummer: 04705372.3
(22) Anmeldetag: 27.01.2004
(51) Int. Cl.: G01N 27/447, H01J 49/04

(54) **VERFAHREN QUANTITATIVEN BESTIMMUNG EINES PROTEIN- UND/ODER PEPTIDMUSTERS EINER FLÜSSIGKEITSPROBE, DIE DEM MENSCHLICHEN ODER TIERISCHEN KÖRPER ENTNOMMEN WORDEN IST**
METHOD QUANTITATIVE DETERMINATION OF A PROTEIN AND/OR PEPTIDE PATTERN OF A FLUID SAMPLE, WHICH HAS BEEN TAKEN FROM THE HUMAN OR ANIMAL BODY
PROCEDE POUR LA DETERMINATION QUANTITATIVE D'UN MOTIF PROTEIQUE ET/OU PEPTIDIQUE D'UN ECHANTILLON DE LIQUIDE PRELEVE SUR LE CORPS D'UN HOMME OU D'UN ANIMAL

(30) Priorität: 31.01.2003 DE 10304106
(43) Veröffentlichungstag der Anmeldung: 09.11.2005
(73) Patentinhaber: mosaiques diagnostics and therapeutics AG, 30659 Hannover (DE)
(72) Erfinder: MISCHAK, Harald, 31319 Sehnde (DE)
(74) Vertreter: von Kreisler Selting Werner - Partnerschaft von Patentanwälten und Rechtsanwälten mbB
(86) Internationale Anmeldenummer: PCT/DE2004/000119
(87) Internationale Veröffentlichungsnummer: WO 2004/068130

(56) Entgegenhaltungen:
- WO-A-01/84140
- WO-A-98/35226
- WO-A-03/102539
- YATES J R: "Database searching using mass spectrometry data" ELECTROPHORESIS, WEINHEIM, DE, Bd. 19, 1998, Seiten 893-900, XP002964174 ISSN: 0173-0835
- MANN M HENDRICKSON R C PANDEY A: "Analysis of proteins and proteomes by mass spectrometry" ANNUAL REVIEW OF BIOCHEMISTRY, PALTO ALTO, CA, US, Bd. 70, 2001, Seiten 437-473, XP002955539 ISSN: 0066-4154

## Beschreibung

Die Erfindung betrifft ein Verfahren nach dem Oberbegriff des Anspruchs 1.

Aus der WO 01/84140 A2 ist ein gattungsgemäßes Verfahren und eine Vorrichtung zur qualitativen und/oder quantitativen Bestimmung eines Protein- und/oder Peptidmusters einer Flüssigkeitsprobe bekannt. Proteine und/oder Peptide einer Flüssigkeitsprobe werden mittels Kapillarelektrophorese getrennt, anschließend direkt ionisiert und online über ein Interface in ein daran gekoppeltes Massenspektrometer zur Detektion überführt.

Zur Kontrolle des Zustandes eines menschlichen oder tierischen Körpers über einen längeren Zeitraum werden Zustände beschreibende Referenz- und Probenwerte sowie hieraus abgeleitete Abweichungen und Übereinstimmungen in einer Datenbank automatisch gespeichert und bei einer neuen Protein und/öder Peptidmusterbestimmung automatisch nach bestmöglichen Übereinstimmungen gesucht.

Der Erfindung liegt die Aufgabe zugrunde, bei einem Verfahren zur qualitativen und/oder quantitativen Bestimmung eines Protein- und/oder Peptidmusters einer Flüssigkeitsprobe die darin enthaltenen Proteine und Peptide in einem gemeinsamen Erfassungs- und Auswertevorgang schnell und reproduzierbar zu ermitteln.

Diese Aufgabe wird bei einem Verfahren nach dem Oberbegriff des Anspruchs 1 durch die im Anspruch angegebenen Merkmale gelöst.

Weiterbildungen und vorteilhafte Ausgestaltungen ergeben sich aus den abhängigen Ansprüchen.

Durch kontinuierliches Zwischenspeichern der Massenbestandteile oder Strukurbestandteile der Proteine und/oder Peptide wird ein mehrdimensionales Datenfeld aus Rohdaten erhalten, aus.sich dann unabhängig mittels Rechenalgorithmen echte Massen oder echte Strukturen berechnen lassen.

Gemäß einer Ausführungsform mit massenspektrometrischen Bestimmung wird durch kontinuierliches Zwischenspeichern der Einselspektren des Massenspektrometers ein dreidimensionales Datenfeld des Gesamtspektrums erhalten, wobei die erste Dimension die Amplitude der Spektralllinien, die zweite Dimension die Zeit und die Dritte Dimension die Masse darstellt. Durch Auswertung mittels Rechenalgorithmen kann so eine präzise Angabe der echten Massen und jeweiligen Gesamtamplituden erfolgen. Dabei werden alle Massen und Gesamtamplituden in einem gemeinsamen Auswertevorgang ermittelt und stehen eine Zuordnung zu den in der Flüssigkeitsprobe enthaltenen Proteinen und/oder Peptiden für einen Vergleich mit gespeicherten Werten zeitgleich zur Verfügung.

Gemäß einer Weiterbildung wird nach Zwischenspeicherung der Einzelspektren und vor Berechnung der echten Massen und der jeweiligen Gesamtamplituden eine Elimination der in den Spektren enthaltenen Störungen, insbesondere Rauschen, vorgenommen.

Da Störungen, insbesondere Rauschen, im Gegensatz zu Nutzsignalen keine systematisch wiederkehrenden Linien, im Spektrogramm erzeugen, können Störungen von Nutzsignalen unterschieden werden. Dadurch ist eine Elimination möglich. Die Erfassung und Auflösung von Nutzsignalen wird so gesteigert, wodurch eine höhere Zahl unterschiedlicher Proteine und/oder Peptide mit geringer Amplitude ihrer Spektralllinien ermittelbar sind.

Vorzugsweise werden nur Massen und Gesamtamplituden oberhalb vorgegebener Schwellwerte ausgewertet. Dadurch wird das Volumen der Daten der auswertenden Einzelspektren verringert und die Rechenzeit verkürzt.

Weiterhin kann anhand von Massen und Gesamtamplituden einzelner Proteine und/oder Peptide, die wegen ihres Vorhandenseins in allen Flüssigkeitsproben als Referenzwerte in der Datenbank gespeichert sind, eine Kalibrierung der Massen und Gesamtamplituden bei einer neuen Protein- und/oder Peptidmusterbestimmung vorgenommen.

Bei dieser Maßnahme wird die aus Voruntersuchungen gewonnene Erkenntnis genutzt, dass einige der bestimmbaren Proteine und/oder Peptide grundsätzlich in allen untersuchten Flüssigkeitsproben und dort auch mit annähernd jeweils gleicher Konzentration vorhanden sind. Dies gilt für Proben von Spendern mit normalem und mit abweichendem Befund gleichermaßen. Durch Nutzung dieser Proteine und/oder Peptide als Referenzwerte können die Rohwerte der Spektren bei einer neuen Protein- und/oder Peptidmusterbestimmung und damit auch die Massen und Gesamtamplituden kalibriert und Vergleiche mit gespeicherten Mustern erleichtert werden.

Nachfolgend wird die Erfindung anhand eines Ausführungsbeispiels und durchgeführter Versuchsreihen ermittelt.

Hierzu zeigen:
Fig. 1 eine schematische Darstellung einer Vorrichtung zur Durchführung der Erfindung,
Fig. 2 eine schematische Darstellung des Verarbeitungsablaufs der Messwerte bis zum Ergebnis,
Fig. 3a-d eine Darstellung dreidimensionaler Massenspektren von Flüssigkeitsproben mit normalem Befund und abweichenden Befunden sowie sowie zugehöriger Tabellen

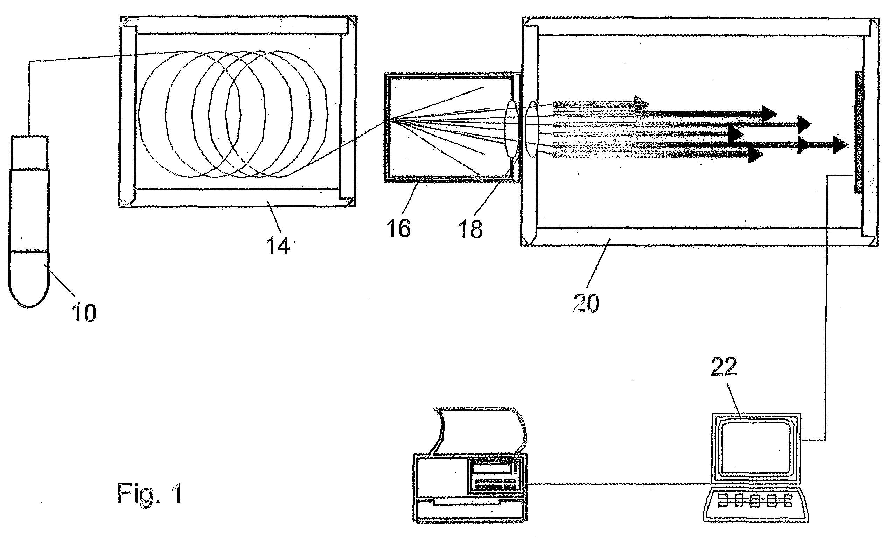

Fig. 1 zeigt eine schematische Darstellung einer Vorrichtung zur Durchführung der Erfindung. Aus einer Flüssigkeitsprobe 10, vorzugsweise Serum oder Urin, werden nach Ultrazentrifugation und Ultrafiltration erhaltene Fraktionen einem Kapillarelektrophoresegerät 14 zugeführt. Die Moleküle der Fraktionen gelangen über eine daran direkt angeschlossene Ionisierungseinheit 16 und über ein Interface 18 an ein online gekoppeltes Massenspektrometer 20. Die Spektrogramme des Massenspektrometer 20 gelangen zu einer Rechnereinheit 22 die einen Speicher und Datenbank umfasst. Die programmgesteuerte Rechnereinheit 22 dient einmal zur Steuerung der Vorrichtung. Außerdem werden die durch Detektion erhaltenen Meßwerte automatisch ausgewertet und in Datenbanken abgespeichert. Weiterhin gleicht das Programm neue Meßwerte automatisch mit den bereits gespeicherten Meßwerten ab.

Durch den Abgleich werden übereinstimmende und abweichende Parameter ermittelt, die zur Beschreibung des Zustandes eines menschlichen oder tierischen Körpers herangezogen werden können.

Mittels der Datenbanken ist es möglich, gleiche, ähnliche oder unterschiedliche Zustände des menschlichen oder tierischen Körpers zu identifizieren.

Das erfindungsgemäße Verfahren zur qualitativen und/oder quantitativen Bestimmung eines Protein- und/oder Peptidmusters einer Flüssigkeitsprobe, die dem menschlichen oder tierischen Körper entnommen worden ist, kann von technisch ausgebildeten Personen durchgeführt werden. Die Anwendung bedarf keines Arztes und kann auch außerhalb medizinischer Laboratorien angewendet werden.

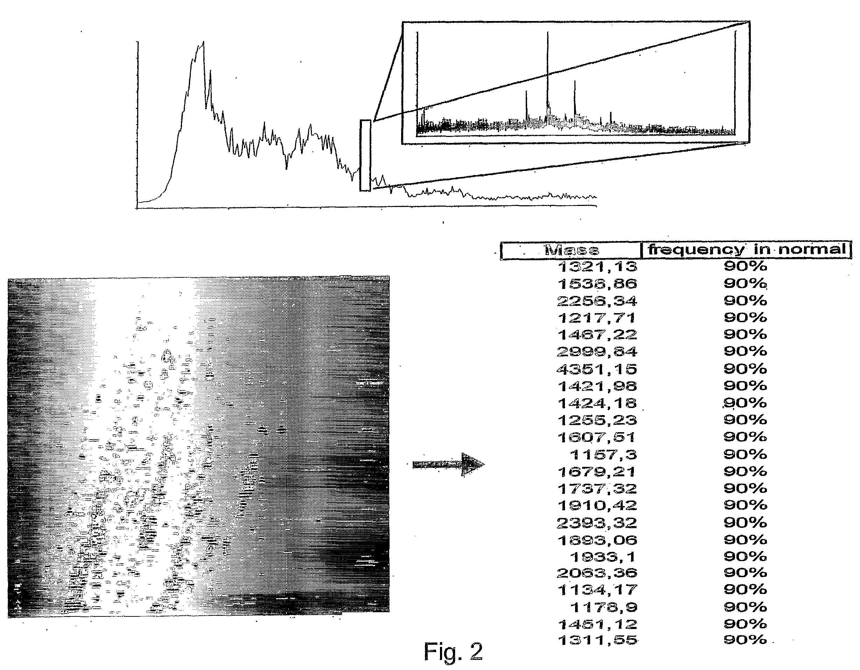

Fig. 2 zeigt eine schematische Darstellung des Verarbeitungsablaufs der Messwerte bis zum Ergebnis. Oben ist der grobe Intensitätsverlauf über der gesamten Messzeit dargestellt. Für ein Zeitfenster von ca. 3 sec. Aus dem Intensitätsverlauf ist ein zugehöriges Spektrogramm dargestellt. Das Bild links unten zeigt eine dreidimensionale Darstellung aller Spektrogramme während einer Messzeit. Die Zeitachse als erste Dimension verläuft von rechts nach links. Die Intensitätsachse ist durch die Helligkeit dargestellt. Die Massenachse verläuft von oben nach unten nach oben. Nach Elimination von Störungen und unter Anwendung von Rechenalgorithmen ermittelt die Rechnereinheit aus allen Einzelspektren die echte Masse und die Gesamtamplituden. Dabei werden in einer ersten Datenanalyse sämtliche Peaks identifiziert. Im nächsten Schritt ist die Ladung jedes Peaks bestimmt, wobei sowohl I-sotopenverteilung als auch konjugierte Massen verwendet werden. Eine Tabelle der echten Massen, die mit einer Wahrscheinlichkeit von mehr als 90% in allen untersuchten Flüssigkeitsproben vorkommen, ist schließlich in der Tabelle rechs unten dargestellt.

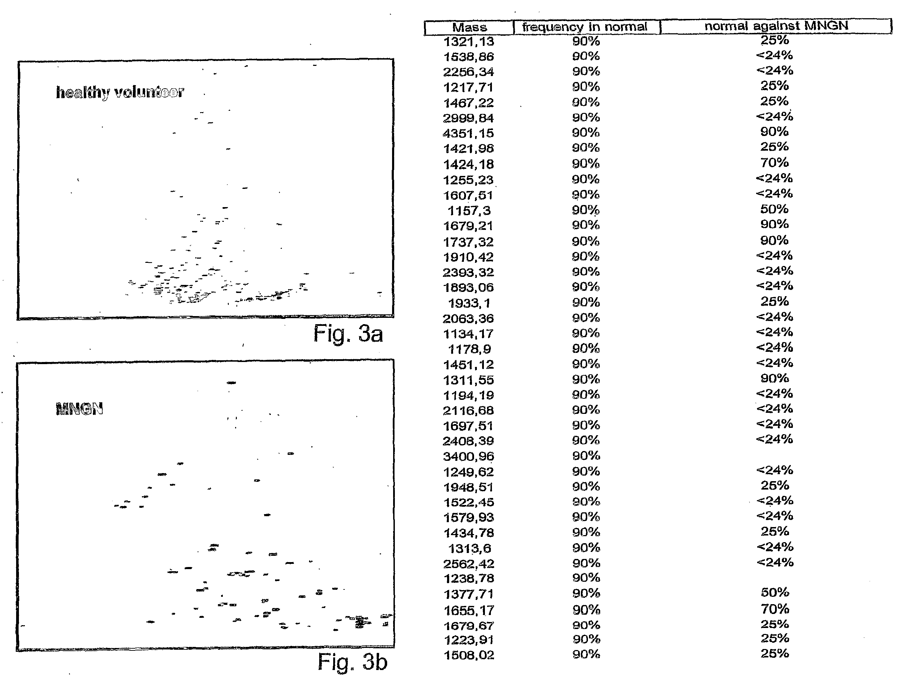

Fig. 3a-d zeigt eine Darstellung typischer Beispiele dreidimensionaler Massenspektren von Flüssigkeitsproben mit normalem Befund und abweichenden Befunden, nämlich MNGN, MCG und FSGS, sowie zugehöriger Tabellen. Jeder krankhafte Befund zeigt ein typisches Proteinmuster. Die Daten der Untersuchungen wurden, unterteilt in die verschiedenen Erkrankungen, statistisch ausgewertet und mit den Daten der gesunden Probanden verglichen. Eine Reihe von Polypeptiden, die in den gesunden Probanden vorhanden ist, konnte bei Probanden mit krankhaftem Befund nicht nachgewiesen werden, während zusätzliche Polypeptide nur bei Probanden mit krankhaftem Befund, nicht aber bei den gesunden Probanden, gefunden werden konnten. Damit können krankheitstypische Proteinmuster aufgestellt werden.

Um die Ergebnisse zu erzielen wurde wie folgt vorgegangen. Alle Probanden wurden vorab mittels Nieren-Biopsien untersucht. Eine Gruppe von 18 normalen Probanden vergleichbaren Geschlechts und Alters mit normaler Nierenfunktion wurde untersucht, um ein normales Polypeptidmuster im Urin zu etablieren. Urinproben wurden von allen Probanden am morgen gesammelt. Die Proben wurden bei 70°C gelagert. Zur Probenaufarbeitung wurden die Proben getaut und 2 ml wurden über eine Pharmacia C2-Säule fraktioniert, um Polypeptide anzureichern und Salz, Harnstoff, und andere störende Komponenten zu entfernen. Polypeptide wurden mit 50% Acetonitril in Waser mit 0,5% Ameisensäure eluiert. Das Eluat wurde lyophilisiert und in 20 µl H2O aufgenommen.

Die mobile Phase enthielt 30% Methanol und 0,5% Ameisensäure in H2O. Dieselbe Flüssigkeit wurde als Trägerflüssigkeit eingesetzt, mit 300 nl/min. Proben wurden mit Druck (1 psi für 10 sec) injiziert, dies entspricht etwa 100 n1 Probe. Der Meßdurchlauf wurde bei 30 kV und 0,2 psi durchgeführt, für 45 min.

Wie in Tabelle 1 gezeigt, konnten 51 Polypeptide konnten in mehr als 90% der normalen Urinproben gefunden werden. Zusätzlich konnten 70 Polypeptide in >70% der Proben gefunden werden, weitere 183 Polypeptide in >50% aller Proben. Der Einsatz dieses Verfahrens erlaubte die Detektion von ca. 1000 Polypeptiden in einer Probe. Ca 300 dieser Polypeptide konnten in mehr als 50% der gesunden Probanden gefunden werden und wurden. Die Daten erlauben das Aufstellen eines normalen Musters. 13 Urinproben von Probanden mit minimal change glomerulonephritis (MCGN), 13 mit membranöser GN (MGN) und 7 mit focal segmentaler Glomerulosclerose (FSGS) wurden mit den Normalmustern verglichen.

Drei Polypeptide die in mehr als 90% aller Proben gefunden wurden, wurden als interner Standard verwendet. 17 Polypeptide wurden ausschließlich in mehr als 90% der MCGN Probanden gefunden, Weitere 17 Polypeptide wurden ausschließlich in MNGN Probanden gefunden. Drei Polypeptide, 1312, 1679 und 1737 Da, waren in allen Proben vorhanden. Diese wurden als interne Standards eingesetzt, um Vergleichbarkeit zu gewährleisten. Die Reproduzierbarkeit dieser Daten erlauben die differentielle Diagnose der Glomerulonephritiden auf Grund der Polypeptid Spektren. Somit ermöglicht der Vergleich der Polypeptidspektren aus Urinproben die Unterscheidung der drei verschiedenen Formen der Glomerulonephritis.

Im nächsten Schritt wurden 33 Probanden mit Nephritis untersucht. Die Daten sind in Tabelle 2 summiert. Alle Probanden erhielten früher verschiedene Schemata von Immunsuppresiva zur Therapie, 19 erhielten niedrig dosiertes Corticosteriod und/oder Cyclosporin A zum Zeitpunkt der Untersuchung. Nephrotische Proteinurie konnte in 2 Probanden nachgewiesen werden, mit Protein Exkretion > 3,5 g/Tag. 12 Probanden zeigten zwischen 3,5 und 0,5 g/Tag Protein im Harn, 3 Probanden zwischen 0,5 und 0,15 g/Tag, und 16 Probanden waren in klinische Remission mit <0,15g/Tag Proteinurie und normalem Serum Kreatinin.

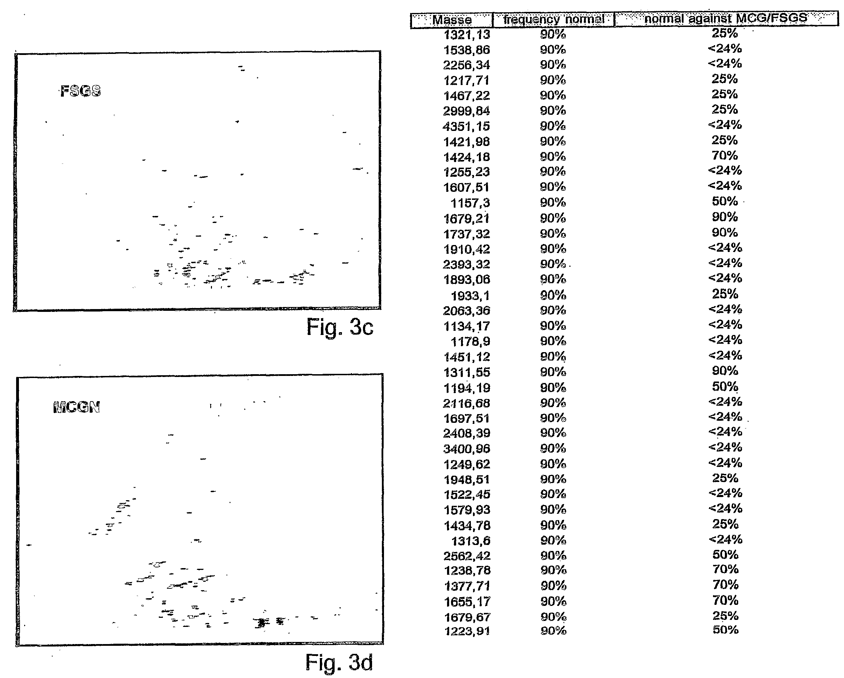

Die Daten der individuellen Untersuchungen wurden in Datenbanken gruppiert (je eine für eine der drei Krankheiten. Die Werte aus diesen Datenbanken, die die typischen Proteinmuster repräsentieren, wurden in Folge verglichen. Signifikante Homologien wurden in jeder Krankheitsgruppe gefunden. Ein Vergleich der Polypeptidmuster konnte für eine retrospektive Differentialdiagnose eingesetzt werden. Typische Beispiele für Spektren von Probanden mit MNGN, MCG und FSGS sind in Fig. 3 gezeigt. Jede Erkrankung zeigt ein typisches Proteinmuster. Die Daten der Untersuchungen wurden, unterteilt in die verschiedenen Erkrankungen, statistisch ausgewertet und mit den Daten der gesunden Probanden verglichen. Eine Reihe von Polypeptiden, die in den gesunden Probanden vorhanden ist, konnte in den kranken Probanden nicht nachgewiesen werden, während zusätzliche Polypeptide nur in den Probanden, nicht aber bei den gesunden Probanden, gefunden werden konnten. Damit können krankheitstypische Proteinmuster aufgestellt werden.

Tabelle 3 zeigt die Zusammenfassung von 122 Polypeptiden, die in mehr als 70% der Normalkontrollen gefunden wurden, im Vergleich zu den drei Krankheitsgruppen. Eine Reihe von Proteinen war Abwesend in den Probanden. Obwohl die Mehrheit der MCG Probanden in klinischer Remission war, konnten 56 Polypeptide, die in der Normalkontrolle vorhanden sind, nur in <25% der Probanden gefunden werden. 9 Polypeptide, die in >90% der Normalkontrollen gefunden wurden, waren abwesend in Probanden mit MNGN. Weiter 47 waren in <25% dieser Probanden gruppe detektierbar. Auch in dieser Gruppe konnte eine Reihe von Polypeptiden gefunden werden, die in der Normalkontrolle oder bei anderen Erkrankungen abwesend waren. 17 Polypeptide konnten identifiziert werden, die spezifisch in MNGN, aber in <25% der MCG oder FSGS Probanden vorhanden waren. Ein Polypeptid konnte nie in gesunden Probanden detektiert werden. Weitere 17 Polypeptide konnten nur im Urin von Probanden mit MCG detektiert werden. Dies ist um so bemerkenswerter, da die meisten von diesen Probanden in klinischer Remission waren.

Die verwendeten Abkürzungen haben folgende Bedeutung:
- MNGN: Membranöse Glomerulonephritis
- FSGS: Focal Segmentale Glomerulosclerose
- MCGN bzw. MCG: Minimal Change Glomerulonephrits

**Table 1**

| **Sex** | **Age** | **Diagnosis** | **S-creatinine µM/l** | **protein g/d** | **Therapy** |
|---|---|---|---|---|---|
| m | 18 | FSGS | 99 | 0.05 | CSA |
| f | 26 | FSGS | 150 | 11.0 | CSA+CS |
| m | 63 | FSGS | < 93 | 0.05 | CS |
| f | 49 | FSGS | 80 | 0.05 | CSA+CS |
| m | 33 | FSGS | 95 | 0.02 | CS |
| f | 39 | FSGS | 75 | 2.0 | CSA+CS |
| f | 41 | FSGS | 16 | 0.7 | CSA |
| | | | | | |
| m | 38 | MNGN | 100 | 0.4 | CSA+CS |
| m | 43 | MNGN | 82 | 0.7 | CS |
| f | 32 | MNGN | 83 | 5.0 | CSA+CS |
| m | 36 | MNGN | 93 | 0.2 | CS |
| m | 48 | MNGN | 100 | 1.0 | CSA+CS |
| f | 68 | MNGN | 150 | 1.0 | - |
| m | 47 | MNGN | 93 | 3.0 | CS |
| m | 69 | MNGN | 128 | 0.02 | CSA |
| f | 34 | MNGN | <80 | 3.0 | CSA+CS |
| f | 21 | MNGN | 80 | 1.0 | CSA+CS |
| m | 23 | MNGN | 150 | 0.3 | - |
| m | 44 | MNGN | 118 | 1.0 | CSA |
| m | 40 | MNGN | 119 | 1.0 | CSA |
| | | | | | - |
| m | 21 | MCGN | 57 | 0.12 | - |
| f | 43 | MCGN | 114 | 0.01 | CSA |
| m | 45 | MCGN + | < 93 | 0.01 | - |
| m | 61 | MCGN + | <93 | 0.1 | - |
| f | 52 | MCGN + | 118 | 0.01 | - |
| f | 44 | MCGN + | <80 | 0.02 | CSA |
| m | 39 | MCGN * | < 93 | 0.02 | - |
| f | 70 | MCGN * | 95 | 0.08 | - |
| m | 68 | MCGN | < 93 | 0.08 | - |
| m | 50 | MCGN | < 93 | 0.05 | - |
| m | 18 | MCGN | 77 | 0.05 | CSA+CS |
| f | 28 | MCGN | 160 | 0.1 | - |
| m | 52 | MCGN | 93 | 0.4 | CS |

| | | | | | |
|---|---|---|---|---|---|
| + frequent relapse; Therapy: immunosuppresson; CSA Ciclosporin A, * DD FSGS CS: corticosteroids; -: currently no immunosuppression | | | | | |

**Table 2**

| **Mass** | **frequency normal [%]** | **normal vs MCG/FSGS [%]** | **normal vs MNGN [%]** |
|---|---|---|---|
| **1134,17** | > 90 | < 25 | < 25 |
| **1157,30** | > 90 | > 50 | > 50 |
| **1178,90** | > 90 | < 25 | < 25 |
| **1194,19** | > 90 | > 50 | < 25 |
| **1217,71** | > 90 | 25 - 50 | 25 - 50 |
| **1223,91** | > 90 | > 50 | 25 - 50 |
| **1238,78** | > 90 | > 70 | |
| **1249,62** | > 90 | < 25 | < 25 |
| **1255,23** | > 90 | < 25 | < 25 |
| **1311,55** | > 90 | > 90 | > 90 |
| **1313,43** | > 90 | < 25 | > 50 |
| **1313,60** | > 90 | < 25 | < 25 |
| **1315,54** | > 90 | 25 - 50 | 25 - 50 |
| **1321,13** | > 90 | 25 - 50 | 25 - 50 |
| **1377,71** | > 90 | > 70 | > 50 |
| **1421,98** | > 90 | 25 - 50 | 25 - 50 |
| **1424,18** | > 90 | > 70 | > 70 |
| **1434,78** | > 90 | 25 - 50 | 25 - 50 |
| **1451,12** | > 90 | < 25 | < 25 |
| **1467,22** | > 90 | 25 - 50 | 25 - 50 |
| **1508,02** | > 90 | 25 - 50 | 25 - 50 |
| **1522,45** | > 90 | < 25 | < 25 |
| **1538,86** | > 90 | < 25 | < 25 |
| **1539,09** | > 90 | < 25 | < 25 |
| **1579,93** | > 90 | < 25 | < 25 |
| **1607,51** | > 90 | < 25 | < 25 |
| **1635,13** | > 90 | < 25 | < 25 |
| **1655,17** | > 90 | > 70 | > 70 |
| **1679,21** | > 90 | > 90 | > 90 |
| **1679,67** | > 90 | 25 - 50 | 25 - 50 |
| **1697,51** | > 90 | < 25 | < 25 |
| **1715,38** | > 90 | < 25 | < 25 |
| **1737,32** | > 90 | > 90 | > 90 |
| **1893,06** | > 90 | < 25 | < 25 |
| **1894,62** | > 90 | < 25 | < 25 |
| **1910,42** | > 90 | < 25 | < 25 |
| **1933,10** | > 90 | 25 - 50 | 25 - 50 |
| **1948,51** | > 90 | 25 - 50 | 25 - 50 |
| **2047,25** | > 90 | < 25 | > 50 |
| **2063,36** | > 90 | < 25 | < 25 |
| **2116,68** | > 90 | < 25 | < 25 |
| **2256,34** | > 90 | < 25 | < 25 |
| **2393,32** | > 90 | < 25 | < 25 |
| **2408,39** | > 90 | < 25 | < 25 |
| **2562,42** | > 90 | > 50 | < 25 |
| **2999,84** | > 90 | 25 - 50 | < 25 |
| **3279,82** | > 90 | > 50 | |
| **3400,96** | > 90 | < 25 | |
| **4351,15** | > 90 | < 25 | > 90 |
| **4679,60** | > 90 | < 25 | > 50 |
| **1027,85** | > 70 | < 25 | |
| **1071,62** | > 70 | 25 - 50 | 25-50 |
| **1081,30** | > 70 | < 25 | < 25 |
| **1141,29** | > 70 | 25 - 50 | 25 - 50 |
| **1160,14** | > 70 | < 25 | < 25 |
| **1191,11** | > 70 | 25 - 50 | 25 - 50 |
| **1195,07** | > 70 | > 50 | < 25 |
| **1199,44** | > 70 | > 90 | > 90 |
| **1200,07** | > 70 | < 25 | < 25 |
| **1235,05** | > 70 | 25 - 50 | 25 - 50 |
| **1261,15** | > 70 | 25 - 50 | 25 - 50 |
| **1265,14** | > 70 | < 25 | < 25 |
| **1275,68** | > 70 | < 25 | < 25 |
| **1282,87** | > 70 | 25 - 50 | 25 - 50 |
| **1297,21** | > 70 | 25 - 50 | > 50 |
| **1307,92** | > 70 | 25 - 50 | 25 - 50 |
| **1311,78** | > 70 | > 90 | > 90 |
| **1367,23** | > 70 | < 25 | < 25 |
| **1368,21** | > 70 | < 25 | < 25 |
| **1389,44** | > 70 | 25 - 50 | 25 - 50 |
| **1421,44** | > 70 | 25 - 50 | 25 - 50 |
| **1424,54** | > 70 | > 70 | > 70 |
| **1438,12** | > 70 | > 50 | 25 - 50 |
| **1445,96** | > 70 | < 25 | < 25 |
| **1461,66** | > 70 | 25 - 50 | 25 - 50 |
| **1472,92** | > 70 | 25 - 50 | 25 - 50 |
| **1545,48** | > 70 | < 25 | < 25 |
| **1561,03** | > 70 | 25 - 50 | 25 - 50 |
| **1578,80** | > 70 | 25 - 50 | 25 - 50 |
| **1589,00** | > 70 | > 50 | < 25 |
| **1635,96** | > 70 | < 25 | < 25 |
| **1651,06** | > 70 | 25 - 50 | 25 - 50 |
| **1753,81** | > 70 | 25 - 50 | 25 - 50 |
| **1761,26** | > 70 | > 50 | > 50 |
| **1765,48** | > 70 | 25 - 50 | 25 - 50 |
| **1766,87** | > 70 | 25 - 50 | 25 - 50 |
| **1875,54** | > 70 | 25 - 50 | 25 - 50 |
| **1877,49** | > 70 | 25 - 50 | 25 - 50 |
| **1888,56** | > 70 | 25 - 50 | 25 - 50 |
| **1913,25** | > 70 | > 50 | 25 - 50 |
| **1931,91** | > 70 | 25 - 50 | 25 - 50 |
| **1947,41** | > 70 | > 90 | > 90 |
| **2007,20** | > 70 | 25 - 50 | 25 - 50 |
| **2045,33** | > 70 | > 50 | > 50 |
| **2068,65** | > 70 | < 25 | < 25 |
| **2174,04** | > 70 | < 25 | > 70 |
| **2248,28** | > 70 | 25 - 50 | 25 - 50 |
| **2312,87** | > 70 | < 25 | < 25 |
| **2546,77** | > 70 | < 25 | < 25 |
| **2568,70** | > 70 | | < 25 |
| **2662,29** | > 70 | 25 - 50 | 25 - 50 |
| **2678,14** | > 70 | < 25 | < 25 |
| **2634,10** | > 70 | 25 - 50 | 25 - 50 |
| **2735,76** | > 70 | < 25 | < 25 |
| **2741,39** | > 70 | < 25 | < 25 |
| **2824,26** | > 70 | < 25 | 25 - 50 |
| **2888,20** | > 70 | | |
| **3010,32** | > 70 | > 50 | 25 - 50 |
| **3264,36** | > 70 | < 25 | < 25 |
| **3384,47** | > 70 | < 25 | |
| **3439,94** | > 70 | 25 - 50 | <25 |
| **3456,69** | > 70 | < 25 | < 25 |
| **3478,40** | > 70 | > 50 | < 25 |
| **3721,63** | > 70 | 25 - 50 | 25 - 50 |
| **3968,61** | > 70 | < 25 | 25 - 50 |
| **4041,83** | > 70 | 25 - 50 | |
| **4096,96** | > 70 | < 25 | < 25 |
| **4746,25** | > 70 | 25 - 50 | 25 - 50 |
| **5799,20** | > 70 | < 25 | < 25 |
| **6169,19** | > 70 | < 25 | < 25 |
| **6183,91** | > 70 | < 25 | < 25 |

**Table 3: Markers for MNGN and MCG**

| **mass** | ***MCGN [%]*** | **Normal [%]** | **MNGN [%]** | **mass** | ***MNGN [%]*** | **Normal [%]** | **MCGN [%]** |
|---|---|---|---|---|---|---|---|
| **1193.95** | > 90 | 25-50 | 25 - 50 | **1108.21** | > 90 | 25-50 | 25-50 |
| **1259.13** | > 90 | < 25 | < 25 | **1386.38** | > 90 | 0 | 25-50 |
| **1265** | > 90 | < 25 | 25-50 | **1737.36** | > 90 | 0 | 25 - 50 |
| **1435.07** | > 90 | < 25 | < 25 | **1781.24** | > 90 | < 25 | < 25 |
| **1523.16** | > 90 | 25-50 | 25-50 | **1797.24** | > 90 | < 25 | < 25 |
| **1538.77** | > 90 | < 25 | < 25 | **1850.6** | > 90 | 0 | < 25 |
| **1561.05** | > 90 | < 25 | < 5 | **2227.55** | > 90 | < 25 | < 25 |
| **1635.99** | > 90 | < 25 | < 25 | **2405.97** | > 90 | 0 | 0 |
| **1651.03** | > 90 | 25 - 50 | 25 - 50 | **2751.55** | > 90 | 0 | < 25 |
| **1679.08** | > 90 | < 25 | < 25 | **3841.38** | > 90 | < 25 | < 25 |
| **1680.33** | > 90 | < 25 | < 25 | **4152.6** | > 90 | < 25 | < 25 |
| **1910.6** | > 90 | < 25 | < 25 | **4239.56** | > 90 | 0 | < 25 |
| **2409.04** | > 90 | < 25 | < 25 | **4624.34** | > 90 | < 25 | < 25 |
| **2824.47** | > 90 | < 25 | < 25 | **4711.49** | > 90 | < 25 | < 25 |
| **3208.58** | > 90 | 25 | 25 | **4891.54** | > 90 | < 25 | < 25 |
| **3441.19** | > 90 | < 25 | < 25 | **5755.82** | > 90 | 0 | < 25 |
| **3456.4** | > 90 | 25-50 | 25-50 | **5869.67** | > 90 | 0 | < 25 |

## Patentansprüche

1. Verfahren zur quantitativen Bestimmung eines Protein- und/oder Peptidmusters einer Flüssigkeitsprobe (10), die dem menschlichen oder tierischen Körper zur Kontrolle seines Zustandes entnommen worden ist, wobei die Peptide und Proteine der Flüssigkeitsprobe (10) nach Aufbereitung einer Analyse unterzogen werden, wobei Zustände eines menschlichen oder tierischen Körpers beschreibende Referenz- und Probenwerte sowie hieraus abgeleitete Abweichungen und Übereinstimmungen ermittelt werden, in einer Datenbank automatisch gespeichert werden und bei einer neuen Protein- und/oder Peptidmusterbestimmung automatisch nach bestmöglichen Übereinstimmungen gesucht wird, **dadurch gekennzeichnet, dass** Massenbestandteile oder Strukturbestandteile der Proteine und/oder Peptide ermittelt und als Werte zwischengespeichert werden, anschließend durch gemeinsame Auswertung der zwischengespeicherten Massenbestandteile oder Strukturbestandteile echte Massen oder echte Strukturen berechnet werden und aus der Kombination der berechneten echten Massen oder echten Strukturen eine Zuordnung zu den in der Flüssigkeitsprobe (10) enthaltenen Proteinen und/oder Peptiden vorgenommen wird, wobei durch kontinuierliches Zwischenspeichern der Einzelspektren des Massenspektrometers ein dreidimensionales Datenfeld des gesamten Spektrums erhalten wird, wobei die erste Dimension die Amplitude der Spektrallinien, die zweite Dimension die Zeit und die dritte Dimension die Masse darstellt, wobei anhand von Massen und Gesamtamplituden einzelner Proteine und/oder Peptide, die wegen ihres Vorhandenseins in allen Flüssigkeitsproben als Referenzwerte in der Datenbank gespeichert sind, eine Kalibrierung der Massen und Gesamtamplituden bei einer neuen Protein- und/oder Peptidmusterbestimmung vorgenommen wird.

2. Verfahren nach Anspruch 1, wobei die Peptiden und Proteine der Flüssigkeitsprobe (10) mittels Kapillarelektrophorese getrennt, anschließend direkt ionisiert und online über ein Interface (18) in ein daran gekoppeltes Massenspektrometer (20) zur Detektion überführt werden, **dadurch gekennzeichnet, dass** Einzelspektren des Massenspektrometer (20) kontinuierlich zwischengespeichert werden, anschließend durch gemeinsame Auswertung der zwischengespeicherten Einzelspektren echte Massen und die jeweiligen Gesamtamplituden berechnet werden und aus der Kombination der berechneten echten Massen und der jeweiligen Gesamtamplituden eine Zuordnung zu den in der Flüssigkeitsprobe (10) enthaltenen Proteinen und/oder Peptiden vorgenommen wird.

3. Verfahren nach Anspruch 2, **dadurch gekennzeichnet, dass** nach Zwischenspeicherung der Einzelspektren und vor Berechnung der echten Massen und der jeweiligen Gesamtamplituden eine Elimination der in den Spektren enthaltenen Störungen, insbesondere Rauschen, vorgenommen wird.

4. Verfahren nach Anspruch 2 oder 3, **dadurch gekennzeichnet, dass** nur Massen und Gesamtamplituden oberhalb vorgegebener Schwellwerte ausgewertet werden.

## Claims

1. A process for the quantitative determination of a protein and/or peptide pattern of a liquid sample (10) that has been taken from a human or animal body for checking its state, wherein said peptides and proteins of said liquid sample (10) are subjected to analysis after processing, in which reference and sample values describing states of a human or animal body as well as mismatches and matches derived therefrom are established, stored automatically in a database, and optimum matches are automatically searched in a new determination of a protein and/or peptide pattern, **characterized in that** mass components or structural components of said proteins and/or peptides are established and stored temporarily as values, followed by calculating real masses or real structures by a common evaluation of the temporarily stored mass components or structural components, and an assignment to the proteins and/or peptides contained in said liquid sample (10) from the combination of the calculated real masses or real structures is performed, wherein a three-dimensional data field of the whole spectrum is obtained by continuously temporarily storing the individual spectra of the mass spectrometer, wherein the first dimension represents the amplitude of the spectral lines, the second dimension represents time, and the third dimension represents the mass, wherein a calibration of the masses and total amplitudes is performed in a new determination of a protein and/or peptide pattern by using masses and total amplitudes of individual proteins and/or peptides stored as reference values in the database because of their being present in all liquid samples.

2. The process according to claim 1, wherein said peptides and proteins of said liquid sample (10) are separated by capillary electrophoresis, then directly ionized and transferred into a mass spectrometer (20) coupled thereto for detection online through an interface (18), **characterized in that** individual spectra of the mass spectrometer (20) are continuously stored temporarily, followed by calculating real masses and the respective total amplitudes by a common evaluation of the temporarily stored individual spectra, and an assignment to the proteins and/or peptides contained in said liquid sample (10) from the combination of the calculated real masses and the respective total amplitudes is performed.

3. The process according to claim 2, **characterized in that** an elimination of the interference contained in the spectra, especially noise, is performed after the temporary storage of the individual spectra and before the calculation of the real masses and the respective total amplitudes.

4. The process according to claim 2 or 3, **characterized in that** only masses and total amplitudes above predefined threshold values are evaluated.

## Revendications

1. Procédé de détermination quantitative d'un modèle protéique et/ou peptidique d'un échantillon de liquide (10) qui a été prélevé sur le corps humain ou animal en vue du contrôle de son état, les peptides et protéines de l'échantillon de liquide (10) étant, après traitement, soumis à une analyse, des valeurs de référence et d'échantillon décrivant des états d'un corps humain ou animal, ainsi que des divergences et des coïncidences qui en sont dérivées, étant déterminées, enregistrées automatiquement dans une base de données, et des coïncidences les meilleures possible étant recherchées automatiquement lors d'une nouvelle détermination de modèle protéique et/ou peptidique, **caractérisé en ce que** des composantes massiques ou des composantes structurelles des protéines et/ou peptides sont déterminées et enregistrées de façon intermédiaire en tant que valeurs, puis des masses réelles ou des structures réelles sont calculées par une analyse commune des composantes massiques ou des composantes structurelles enregistrées de façon intermédiaire et, à partir de la combinaison des masses réelles ou structures réelles calculées, il est procédé à une affectation aux protéines et/ou peptides contenus dans l'échantillon de liquide (10), un champ de données tridimensionnel du spectre total étant obtenu par un enregistrement intermédiaire continu des spectres individuels du spectromètre de masse, la première dimension représentant l'amplitude des raies spectrales, la deuxième dimension le temps et la troisième dimension la masse, un étalonnage des masses et des amplitudes totales étant entrepris lors d'une nouvelle détermination de modèle protéique et/ou peptidique à l'aide de masses et d'amplitudes totales de protéines et/ou peptides individuels qui sont enregistrées en tant que valeurs de référence dans la base de données en raison de leur présence dans tous les échantillons de liquide.

2. Procédé selon la revendication 1, dans lequel les peptides et protéines de l'échantillon de liquide (10) sont séparés au moyen d'une électrophorèse capillaire, puis ionisés directement et transférés en ligne pour détection, par le biais d'une interface (18), dans un spectromètre de masse (20) qui y est couplé, **caractérisé en ce que** des spectres individuels du spectromètre de masse (20) sont enregistrés de façon intermédiaire en continu, puis des masses réelles et les amplitudes totales respectives sont calculées par une analyse commune des spectres individuels enregistrés de façon intermédiaire, et il est procédé à une affectation aux protéines et/ou peptides contenus dans l'échantillon de liquide (10) à partir de la combinaison des masses réelles calculées et des amplitudes totales respectives.

3. Procédé selon la revendication 2, **caractérisé en ce que**, après l'enregistrement intermédiaire des spectres individuels et avant le calcul des masses réelles et des amplitudes totales respectives, il est procédé à une élimination des perturbations contenues dans les spectres, en particulier le bruit.

4. Procédé selon la revendication 2 ou 3, **caractérisé en ce que** seules des masses et des amplitudes totales au-dessus de valeurs de seuil prédéfinies sont analysées.
